(19) **Europäisches Patentamt**

**European Patent Office**

**Office européen des brevets**

(11) **EP 1 420 510 A1**

(12) **EUROPÄISCHE PATENTANMELDUNG**

(43) Veröffentlichungstag:
**19.05.2004 Patentblatt 2004/21**

(51) Int Cl.7: **H02P 6/18**

(21) Anmeldenummer: **03021400.1**

(22) Anmeldetag: **22.09.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK** | (72) Erfinder:<br>• **Rauer, Manfred**<br>**78112 Sankt Georgen (DE)**<br>• **Hans, Helmut, Dr.**<br>**78112 Sankt Georgen (DE)** |
| (30) Priorität: **15.11.2002 DE 10253388** | (74) Vertreter: **Liesegang, Eva** |
| (71) Anmelder: **Minebea Co., Ltd.**<br>**Kitasaku-gun, Nagano-ken (JP)** | **Forrester & Boehmert,**<br>**Pettenkoferstrasse 20-22**<br>**80336 München (DE)** |

(54) **Verfahren zum Justieren einer Sensorvorrichtung zur Bestimmung der Drehlage eines Rotors eines elektronisch kommutierten Motors**

(57) Verfahren zum Justieren einer Sensorvorrichtung zur Bestimmung der Drehlage eines Rotors eines elektronisch kommutierten Motors, der einen Rotor und einen Stator aufweist, bei dem die Sensorvorrichtung in einer bestimmten Lage relativ zu dem Rotor montiert wird, die Inkremente, welche die Sensorvorrichtung während einer Umdrehung des Rotors erzeugt, erfasst werden, die Winkellage des Rotors während der Umdrehung erfasst wird, die erfasste Winkellage mit den Inkrementen der Sensorvorrichtung korreliert wird und die Korrelation von Winkellage und Inkrementen der Sensorvorrichtung gespeichert wird.

Fig. 4

EP 1 420 510 A1

**Beschreibung**

Die Erfindung betrifft ein Verfahren zum Justieren einer Sensorvorrichtung zur Bestimmung der Drehlage eines Rotors eines elektronisch kommutierten Motors.

Die Erfindung wird bevorzugt auf dem Gebiet der bürstenlosen, elektronisch kommutierten Gleichstrommotoren eingesetzt. Sie ist jedoch auch auf andere Elektromotoren anwendbar.

Solche Motoren können in unterschiedlichen Bereichen zur Anwendung kommen, beispielsweise in der Automobiltechnik für Antriebe zur Unterstützung der Lenkung des Bremssystems oder für Pumpen und Gebläse. Andere Bereiche sind z.B. Lüftergebläse in Netzteilen, oder Spindelmotoren in Plattenlaufwerken für Datenverarbeitungsanlagen, um nur einige wenige Beispiele zu nennen.

Ein elektronisch kommutierter, bürstenloser Gleichstrommotor umfasst grundsätzlich eine Welle, eine Rotorbaugruppe, die einen oder mehrere auf der Welle angeordneten Permanentmagnete aufweist, und eine Staturbaugruppe, die einen Staturkörper und Phasenwicklungen umfasst. Zwei Lager sind in axialem Abstand an der Welle angeordnet, um die Rotorbaugruppe und die Staturbaugruppe relativ zueinander zu lagern.

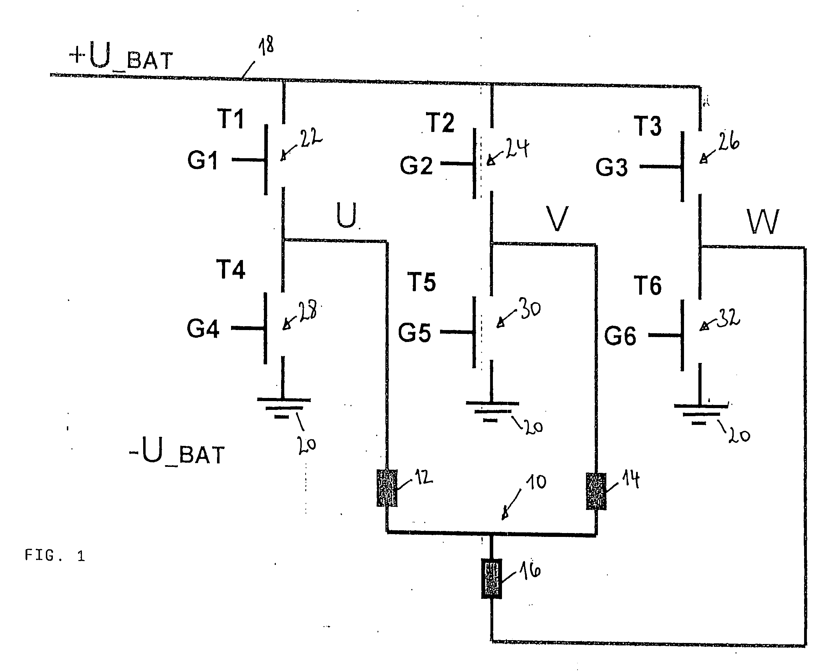

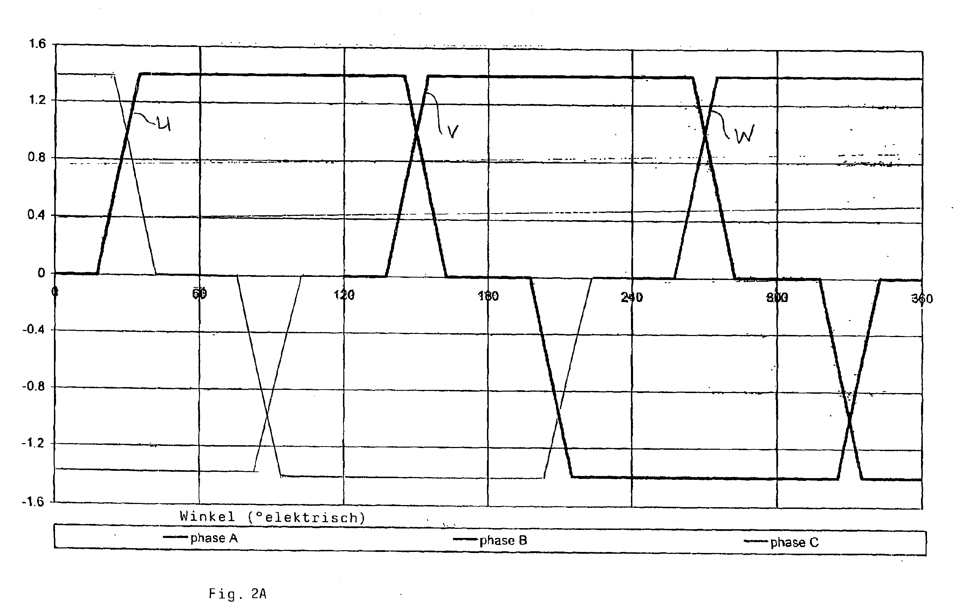

Fig. 1 zeigt ein schematisches Schaltbild einer Ansteuerelektronik für einen dreiphasigen Gleichstrommotor. Der Gleichstrommotor umfasst drei Phasenwicklungen U, 12; V, 14; W, 16, die in Fig. 1 schematisch in Sternschaltung 10 dargestellt sind. Die drei Wicklungen 12, 14, 16 sind zwischen einer positiven Versorgungsschiene 18 und einer negativen Versorgungsschiene 20 angeschlossen. Die positive Versorgungsschiene 18 führt das Potential $+U_{BAT}$, und die negative Versorgungsschiene 20 führt das Potential $-U_{BAT}$. Die Phasenwicklungen 12, 14, 16 werden über sechs Leistungs-Schaltbauteile T1, 22; T2, 24; T3, 26; T4, 28; T5, 30; T6, 32 nach Maßgabe von Steuersignalen mit den Versorgungsschienen 18, 20 verbunden. Die Leistungs-Schaltbauteile 22 bis 32 sind vorzugsweise Leistungstransistoren. Sie weisen Steueranschlüsse auf, die in Fig. 1 mit G1 bis G6 bezeichnet sind. Die Steueranschlüsse entsprechen insbesondere den Gates der Leistungstransistoren. Durch Anlegen geeigneter Steuersignale an die Gates der Leistungstransistoren werden die Phasenwicklungen 12 bis 16 des Gleichstrommotors bestromt, um dessen Betrieb zu steuern. Verfahren zum Steuern eines bürstenlosen elektronisch kommutierten Gleichstrommotors sind beispielsweise beschrieben in DE 10033561 A1 und U.S. 6,400,109 B1, auf die Bezug genommen wird.

Bei Gleichstrommotoren, insbesondere dreiphasige Gleichstrommotoren wie sie in industriellen Anwendungen und in der Automobiltechnik zum Einsatz kommen, unterscheidet man zwischen einer "blockförmigen" und einer "sinusförmigen" Bestromung der Phasen des Motors. "Blockförmige" Bestromung bedeutet, dass der Strom, der an die Phasenwicklungen angelegt wird, einen rechteckförmigen Verlauf hat. Der Strom wird zu einem Zeitpunkt auf einen gegebenen Wert eingeschaltet und zu einem anderen Zeitpunkt wieder abgeschalt. Solche Motoren haben üblicherweise eine trapezförmige induzierte Spannung Fig. 2A zeigt schematisch die induzierten Spannungen eines "blockförmig" bestromten oder "blockkommutierten" Motors. Im Betrieb sollte die Umschaltung der Phasenströme dann erfolgen, wenn sich jeweils zwei induzierte Spannungen schneiden, um eine minimale Drehmomentwelligkeit zu erzeugen. Hierzu wird eine Information über die jeweilige Rotorlage benötigt, um die Phasenströme zum richtigen Zeitpunkt umzuschalten.

Soll der Strom nicht nur ein- und ausgeschaltet werden, sondern auch abhängig von der Rotorlage gesteuert werden, so ist eine detaillierte Information über die Rotorlage notwendig. Eine Steuerung des Stromes $i(\varphi)$ ist sinnvoll, weil durch die geeignete Einstellung von $i(\varphi)$ die Ausbildung des Drehmomentes beeinflusst werden kann:

$$T(\varphi) = K_T(\varphi) * i(\varphi)$$

Beispielsweise auf der Grundlage der folgenden Gleichungen:

$$\sin^2(\varphi) + \sin^2(\varphi - \tfrac{\pi}{2}) = 1$$

oder

$$\sin^2(\varphi) + \sin^2(\varphi - \tfrac{2\pi}{3}) + \sin^2(\varphi - \tfrac{4\pi}{3}) = 1$$

kann ein konstantes Drehmoment erreicht werden, wenn die induzierte Spannung $U_{ind}(\varphi)$ und somit $K_E(\varphi)$ bzw. $K_T(\varphi)$ und der Strom $i(\varphi)$ einen sinusförmigen Verlaufhaben und Spannung und Strom in Phase liegen und die einzelnen Phasen des Motors z.B. bei einem zweiphasigen Motor um 90° elektrisch und bei einem dreiphasigen Motor um 120° elektrisch gegeneinander versetzt sind.

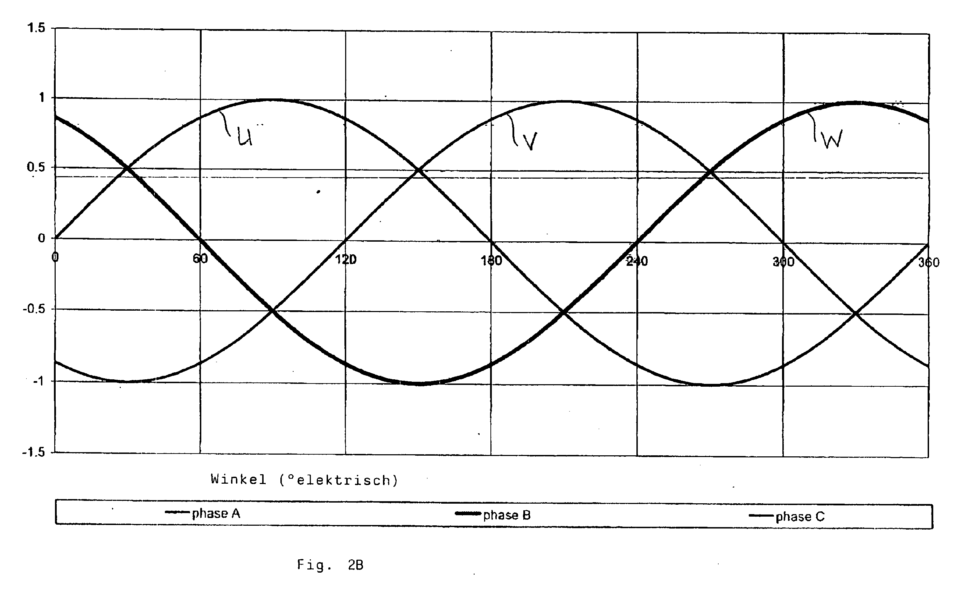

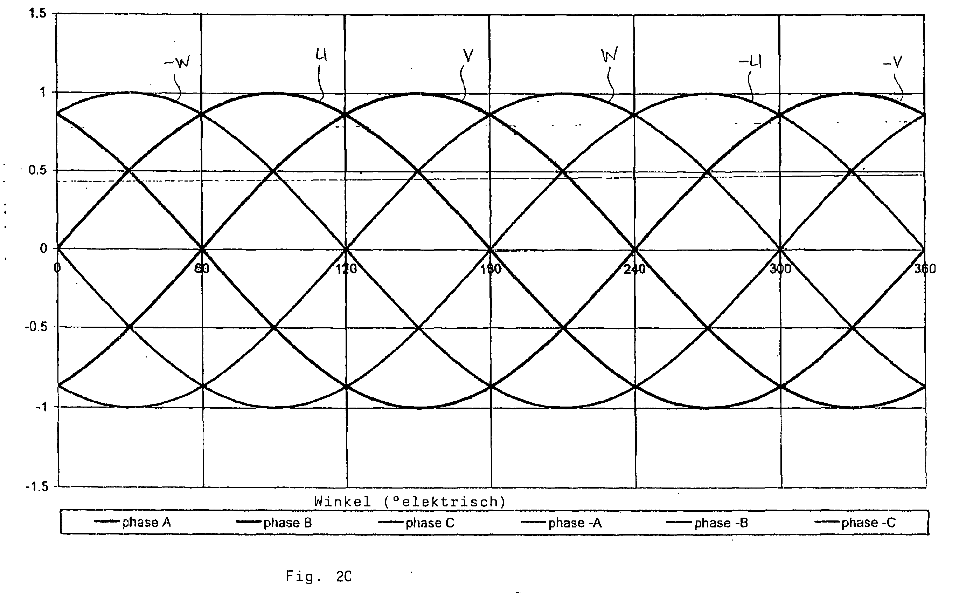

Fig. 2B zeigt die induzierten Spannungen eines dreiphasigen Motors. Die Bestromung der Phasen des Gleichstrommotors sollte wie in Fig. 2C zeigt erfolgen. Sie setzt sich während eines elektrischen Zyklus aus sechs Abschnitten zusammen.

Um einen von der Rotorposition und somit der induzierten Spannung abhängigen sinusförmigen Strom zu erzeugen, muss die genaue Lage des Rotors bekannt sein. Im Stand der Technik werden zur Erfassung der Rotorlage z.B. Encoder oder Resolver eingesetzt. Dies sind Rotorlagegeber, welche mit einer bestimmten Auflösung $N_{INC}$ arbeiten und die Winkellage des Rotors mit einer Winkelauflösung:

$$\varphi_{INC} = \frac{360°}{N_{INC}}$$

angeben können. Abhängig von der Auflösung des Rotorlagegebers kann der Strom i($\varphi$) zur Bestromung der Motorphasen in entsprechend vielen Schritten gesteuert werden.

Ein Resolver ist grundsätzlich ähnlich wie ein Transformator mit einer Primärwicklung und zwei Sekundärwicklungen aufgebaut. Das Wicklungsverhältnis und die Polarität zwischen Primär- und Sekundärwicklung variiert abhängig von der Winkellage der Welle. Der Resolver weist wenigstens zwei im Winkel von 90° zueinander ausgerichtete Sekundärwicklungen auf, die stationär montiert sind (Stator). Die Primärwicklung ist an der Welle des Resolvers angeordnet und wird als Rotor bezeichnet. Wenn eine Wechselspannung mit einer konstanten Frequenz in der Primärwicklung induziert wird, haben die Ausgangssignale des Stators dieselbe Frequenz, sind jedoch um 90° versetzt. Man erhält somit ein Sinussignal und ein Kosinussignal. Die Spitzenspannung des Resolvers variiert mit der Drehung der Welle.

Das Ausgangssignal der Spulen wird über einen Analog-Digital- Wandler umgesetzt, wobei die zwei höchstwertigen Bits des Wandlerausgangssignals angeben, in welchem Viertelkreis die Welle steht, und die verbleibenden Bits den Winkel der Welle jeweils zum Anfang eines Viertelkreises angeben. Das Ausgangssignal des Analog-Digital- Wandlers wird in jedem Fall eine binäre Zahl sein.

Encoder, die auch als Inkrementalencoder bezeichnet werden, erzeugen zwei Ausgangssignale unter Verwendung beispielsweise einer Glasscheibe, in die gleichmäßige Unterteilungen geätzt sind. Auf einer Seite der Scheibe ist eine Lichtquelle angeordnet, auf der anderen Seite zwei Lichtdetektoren. Die Scheibe wird an der Welle montiert, und die Lichtquelle und die Detektoren sind stationär angeordnet. Wenn die Scheibe sich dreht, zeichnen die Detektoren eine Unterbrechung des Lichtstrahls durch die Lichtscheibe auf. Durch Zählen der Übergänge von hell zu dunkel kann eine relative Drehung der Welle bestimmt werden. Zwei Detektoren werden verwendet, wenn auch die Drehrichtung erfasst werden soll. Encoder der beschriebenen Art können nur eine inkrementelle Wellendrehung erfassen. Die absolute Wellenposition wird durch einen dritten Sensor mit Hilfe eines sogenannten Null-Indexes oder einer Null-Referenzspur erfasst.

Der Rotorlagegeber liefert die Information, welche für die Steuerung des Stroms notwendig ist. Dabei entsteht das Problem, dass die Winkelposition des Rotorlagegebers zu dem Rotor bei der Montage zunächst nicht bekannt ist. Im Stand der Technik ist daher eine mechanische Justierung des Rotorlagegebers relativ zu dem Rotor vorgesehen, damit der Null-Index des Rotorlagegebers mit einer bestimmten, bekannten Winkellage des Rotors zusammenfällt. Insbesondere sollte der Null-Index relativ zu einer bestimmten, bekannten Kommutierungsposition eingestellt werden. Diese mechanische Justierung ist relativ zeitaufwendig und fehlerträchtig.

Es ist daher eine Aufgabe der Erfindung, ein Verfahren zum Justieren einer Sensorvorrichtung zur Bestimmung der Drehlage eines Rotors eines elektronisch kommutierten Gleichstrommotors anzugeben, das einfach und wenig fehlerträchtig ist.

Diese Aufgabe wird durch ein Verfahren gemäß Anspruch 1 gelöst. Die Erfindung sieht auch ein System zur Justierung einer Sensorvorrichtung gemäß Anspruch 12 vor.

Bei dem erfindungsgemäßen Verfahren wird die Sensorvorrichtung in einer bestimmten Lage relativ zu dem Rotor montiert, und die Inkremente, welche die Sensorvorrichtung während einer Umdrehung des Rotors erzeugt, werden erfasst. Ferner wird die Winkellage des Rotors während der Umdrehung des Rotors erfasst, wobei diese Winkellage in absoluten Werten oder in bezug auf einen oder mehrere Kommutierungswinkel bestimmt werden kann. Anschießend wird die erfasste Winkellage mit den Inkrementen der Sensorvorrichtung korreliert, und die Korrelation von Winkellage und Inkrementen der Sensorvorrichtung wird gespeichert. Bei dem erfindungsgemäßen Verfahren wird die Sensorvorrichtung bei der Montage des Motors somit nicht mechanisch ausgerichtet, sondern die Lage des Null-Index der Sensorvorrichtung relativ zu den jeweiligen Kommutierungspositionen wird messtechnisch in Inkrementen erfasst. Die Inkremente der verschiedenen Positionen können dann in einem nicht flüchtigen Speicher der Positionslagegeberelektronik gespeichert werden.

Die Erfindung hat nicht nur den Vorteil, dass sie eine mechanische Justierung der Sensorvorrichtung überflüssig macht, für unterschiedliche Polteilung verschiedener Motoren können auch die Inkremente für jeden Phasenübergang gesondert bestimmt und gespeichert werden.

Bei dem erfindungsgemäßen Verfahren sollte wenigstens jedem Kommutierungswinkel ein entsprechendes Inkrement der Sensorvorrichtung, ausgehend von dem Null-Index, zugeordnet werden. Vorzugsweise wird jedem Inkrement der Sensorvorrichtung eine bestimmte Winkellage des Sensors zugeordnet.

In der bevorzugten Ausführungsform der Erfindung werden die Anzahl der Inkremente der Sensorvorrichtung jeweils vom Null-Index bis zu dem Kommutierungswinkel gezählt und gespeichert. Ein- und dieselbe Sensorvorrichtung kann dadurch für unterschiedliche Motoren mit unterschiedlichen Polzahlverhältnissen, und somit unterschiedlichen Kommutierungswinkeln, eingestellt werden, ohne dass die Sensorvorrichtung an sich verändert werden muss. Sofern ein Kommutierungswinkel oder eine andere gesuchte Winkellage des Rotors zwischen zwei Inkrementen der Sensorvorrichtung liegt, kann die gesuchte Winkellage durch Interpolieren noch genauer ermittelt werden.

Für die Justierung der Sensorvorrichtung wird der zu justierende Motor extern angetrieben, und die induzierten Spannungen werden erfasst, um die absolute Lage der Rotorwelle sowie die notwendigen Kommentierungswinkel zu ermitteln. Zum Erfassen kann beispielsweise die Back-EMF (EMF = elektromotorische Kraft) gemessen werden. Bei der bevorzugten Ausführungsform wird ferner zu jedem Zeitpunkt, zu dem ein gesuchter Kommutierungswinkel gefunden wird, ein Meldesignal erzeugt, um die erfasste Winkellage als Kommutierungsposition zu kennzeichnen und die aktuelle absolute Position der Sensorvorrichtung, d.h. die aktuelle Inkrementzahl, zu speichern. Wie erwähnt, können abhängig von dem Polzahlverhältnis des Motors unterschiedliche Kommutierungswinkel abgeleitet werden.

Die Erfindung sieht auch einen elektronisch kommutierten Motor mit einem Rotor und einem Stator und mit einer Sensorvorrichtung zur Erfassung der Drehlage des Rotors vor, wobei die Sensorvorrichtung in einer bestimmten Lage relativ zu dem Rotor montiert ist, und mit einer Speichervorrichtung zur Speicherung einer Korrelation von Winkellage des Rotors und Inkrementen der Sensorvorrichtung sowie mit einer Steuereinrichtung zur Steuerung des Motors abhängig von Ausgangssignalen der Sensorvorrichtung und der gespeicherten Korrelation.

Schließlich sieht die Erfindung auch ein System zur Justierung einer Sensorvorrichtung gemäß den Ansprüchen 12 bis 14 vor.

Die Erfindung ist im folgenden anhand einer bevorzugten Ausführungsform mit Bezug auf die Zeichnungen näher erläutert. In den Figuren zeigen:

Fig. 1    ein Schaltbild einer Ansteuerelektronik für einen dreiphasigen Gleichstrommotor;

Fig. 2A   den Verlauf der induzierten Spannungen eines blockförmig bestromten dreiphasigen Gleichstrommotors;

Fig. 2B   den Verlauf der induzierten Spannungen eines sinusförmig bestromten dreiphasigen Gleichstrommotors;

Fig. 2C   die Bestromung eines dreiphasigen Gleichstrommotors während eines elektrischen Zyklus;

Fig. 3    die Bestromung eines dreiphasigen Gleichstrommotors während eines halben elektrischen Zyklus und die korrespondierenden Signale des Rotorlagegebers gemäß der Erfindung;

Fig. 4    ein Blockdiagramm eines Systems zur Justierung der Sensorvorrichtung gemäß der Erfindung.

Fig. 1, die bereits beschrieben wurde, zeigt ein schematisches Schaltbild einer Ansteuerelektronik für einen dreiphasigen Gleichstrommotor. Zur Bestromung der drei Phasen U 12, V 14, und W 16, des Gleichstrommotors werden die Transistoren T1 bis T6, 22 bis 32, über ihre Gates G1 bis G6 angesteuert. Die Steuerzeitpunkte werden bestimmt durch die Ausgangssignale der Sensorvorrichtung, die erfindungsgemäß eingestellt ist.

Fig. 2B zeigt die induzierten Spannungen eines dreiphasigen Gleichstrommotors mit sinusförmiger Bestromung oder Kommutierung, wobei die induzierten Spannungen der drei Phasen mit u, v bzw. w bezeichnet sind. In Fig. 2B ist ein elektrischer Zyklus von 360° der Bestromungsphase dargestellt.

Fig. 2C zeigt die Bestromung des dreiphasigen Gleichstrommotors, die sich während eines elektrischen Zyklus aus sechs Abschnitten zusammensetzt, welche mit u, v, w, -u, -v und -w bezeichnet sind. Die dargestellten Kurven u, v, w, -u, -v, -w entsprechen den Strömen, welche über die Transistoren T1 bis T6, 22 bis 32, in Fig. 1 auf die Wicklungen U, 12, V, 14, und W, 16, aufgeschaltet werden.

Erfindungsgemäß ist zur Justierung der Sensorvorrichtung, oder des Rotorlagegebers, vorgesehen, die Inkremente, welche die Sensorvorrichtung während einer Umdrehung des Rotors erzeugt, zu erfassen, gleichzeitig die Winkellage des Rotors während der Umdrehung zu erfassen und die erfasste Winkellage mit den Inkrementen der Sensorvorrichtung zu korrelieren und diese Korrelation von Winkellage und Inkrementen der Sensorvorrichtung zu speichern. Insbesondere soll die Anzahl der Inkremente der Sensorvorrichtung, die zwischen einem Null-Index und jeweils einem Kommutierungswinkel liegen, erfasst und gespeichert werden.

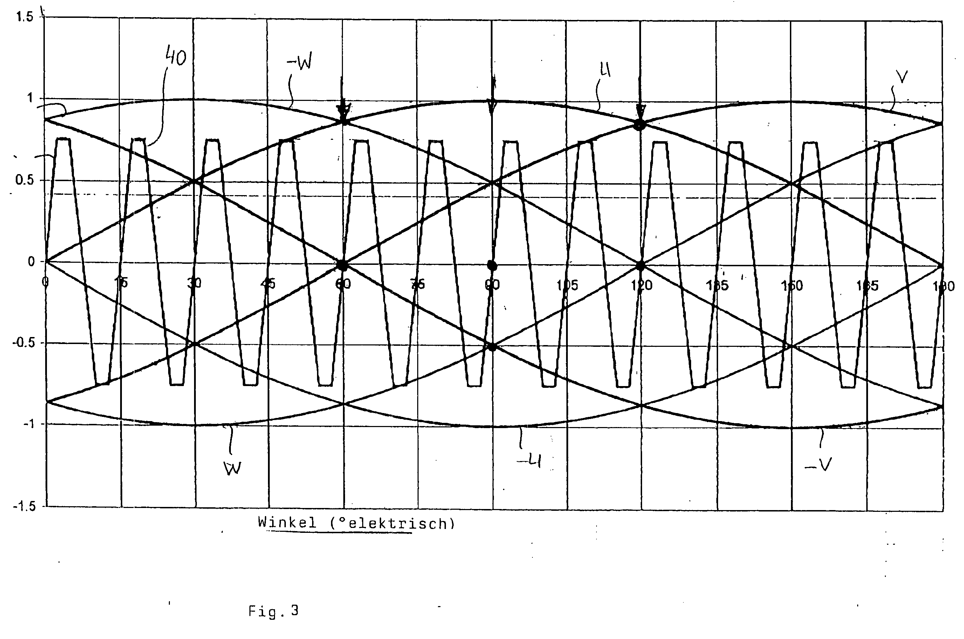

Fig. 3 zeigt eine ähnliche Darstellung wie Fig. 2C, wobei in Fig. 3 der Verlauf der Ströme nur über eine halbe Periode oder Umdrehung des Gleichstrommotors, d.h. über 180° elektrisch, dargestellt ist. Die Ströme sind entsprechend der Darstellung der Fig. 2C mit u, v, w, -u, -v und -w bezeichnet. Gesuchte Kommutierungswinkel sind in dieser Figur an drei Stellen beispielhaft durch Pfeile gekennzeichnet.

Ferner ist in Fig. 3 ein Ausgangssignal eines Rotorlagegebers schematisch dargestellt und mit bezeichnet. Die in Fig. 3 gezeigte Auflösung des Rotorlagegebers beträgt lediglich 24 Inkremente pro elektrischer Zyklus, wobei der Fachmann verstehen wird, dass diese Auflösung lediglich als ein Beispiel dient und in der Praxis wesentlich höhere Auflösungen der Sensorvorrichtung gewählt würden. Die Auflösung der Sensorvorrichtung kann beispielsweise zwischen 512 und 32768 Inkrementen betragen. Bei dem vorliegenden Beispiel ist ferner angenommen, dass der Gleichstrommotor vier Polpaare umfasst.

Die Schaltzeitpunkte sind in Fig. 3 durch Pfeile gekennzeichnet. Sie entsprechen den jeweiligen Kommutierungswinkeln und werden erfindungsgemäß mit dem jeweils zugehörigen Inkrement der Sensorvorrichtung, ausgehend von einem Null-Index, korreliert und gespeichert. Bei der vorliegenden Erfindung muss ein Inkrement des Rotorlagegebers nicht jeweils genau mit einem Schaltzeitpunkt zusammenfallen, weil zum Wiederauffinden der Schaltzeitpunkte erfindungsgemäß zwischen zwei Inkrementen des Rotorlagegebers interpoliert werden kann, falls dies notwendig ist.

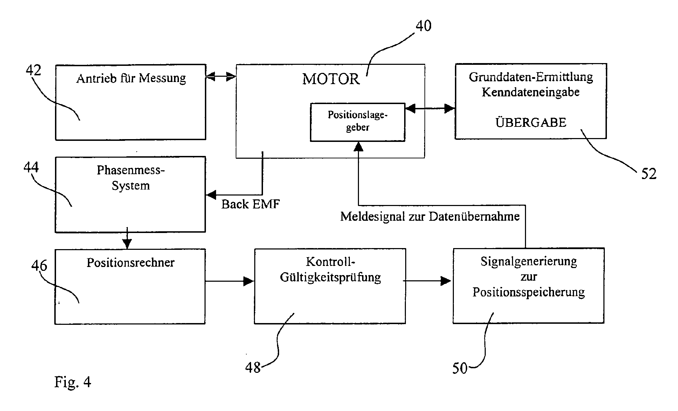

Fig. 4 zeigt ein Blockdiagramm eines Systems zur Justierung einer Sensorvorrichtung gemäß der Erfindung. In Fig. 4 ist ein bürstenloser elektronisch kommutierter Gleichstrommotor schematisch durch einen Kasten 40 dargestellt. Dem Motor 40 ist ein externer Antrieb 42 zugeordnet, der für die Justierung der Sensorvorrichtung verwendet wird. Ein Phasenmeßsystem 44 und ein Positionsrechner 46 sind mit dem Motor 40 verbunden. Dem Positionsrechner 46 ist eine Kontrollstufe 48 zur Überprüfung der Gültigkeit der Messung nachgeschaltet, die ein Ausgangssignal an eine Meldestufe 50 ausgibt. Die Meldestufe 50 erzeugt einen Meldeimpuls, der die Speicherung der Positionsdaten triggert. An dem Motor 40 ist ein Rotorlagegeber vorgesehen, der ein Referenzsignal erzeugt, das die absolute Winkellage der Rotorwelle in Inkrementen angibt. Dieser Rotorlagegeber kann ein hoch auflösender Referenzsensor oder die Sensorvorrichtung selbst sein. Der Meldeimpuls zur Datenübernahme wird an den Motor 40 übergeben, wobei der Motor 40 die Sensorvorrichtung und einen zugehörigen Speicher umfasst, in dem die aktuelle absolute Winkellage in Inkrementen der Welle als eine Kommutierungsposition gespeichert werden kann.

Erfindungsgemäß wird der Motor 40 über den Antrieb 42 extern angetrieben. Dabei werden in den Phasenwicklungen des Motors Spannungen induziert, wie in den Fig. 2A und 3 gezeigt. Die induzierten Spannungen werden durch Messen der Back-EMF erfasst, um so die absolute Lage der Rotorwelle sowie die jeweiligen Kommutierungswinkel zu ermitteln. Hierzu sind das Phasenmeßsystem 44 und der Positionsrechner 46 vorgesehen. Die Kontrollstufe 48 überprüft, ob die gemessenen Werte für den einzustellenden Gleichstrommotor 40 gültig sind. Und die Meldestufe 50 erzeugt wenigstens bei jedem Kommutierungswinkel ein Signal, das eine Positionsspeicherung auslöst und gibt einen Meldeimpuls zur Datenübernahme an den Motor 40 aus.

Der Motor 40 umfasst die Sensorvorrichtung und einen Speicher und bewirkt bei Empfang des Meldeimpulses, dass die aktuelle absolute Winkellage als Kommutierungsposition gespeichert wird. Bei einer besonderen Ausführungsform der Erfindung ist für das Justieren der Sensorvorrichtung ein zusätzlicher hoch auflösender Lagegeber im Positionslagegeber vorgesehen, der einen bekannten Null-Index hat und hoch aufgelöste Referenz-Inkremente ausgibt, um die Kommutierungswinkel präzise zu bestimmen. Je nach Polzahl des Motors ("blockbestromt") werden unterschiedlich viele Kommutierungspositionen festgehalten. Dadurch kann sich das System auf unterschiedliche Polzahlverhältnisse automatisch anpassen, ohne dass die Sensorvorrichtung an sich verändert werden muss.

Der exakte Lage des Null-Index wird mit Hilfe der festgestellten Differenz in Inkrementen zu einem Back-EMF-Schnittpunkt rechnerisch ermittelt und im Positionslagegeber gespeichert. Beim Betrieb des Motors wird dann zum korrekten Zeitpunkt das Null-Index-Signal an die Steuerelektronik für den Motor weitergeben werden.

Die im Positionlagegeber im Motor gespeicherte Information kann auch zur Darstellung der absoluten Lageinformation unter Nutzung der Inkrement-Winkelkorrelation herangezogen werden und über eine digitale Schnittstelle beim Betrieb des Motors an die Steuerelektronik weitergegeben werden. Die Schnittstelle kann seriell oder parallel ausgeführt werden.

Bei Verwendung eines hochauflösenden Lagegebers für die Justierung der Sensorvorrichtung können Kommutierungspositionen bestimmt werden, welche zwischen einzelnen Inkrementen der Sensorvorrichtung liegen. Bei einer besonderen Ausführungsform der Erfindung ist daher zusätzlich eine Interpolationsvorrichtung vorgesehen, welche zwischen einzelnen Inkrementen der Sensorvorrichtung interpoliert, um die Kommutierungsposition noch genauer zu bestimmen.

Das Zählen der Inkremente der Sensorvorrichtung setzt voraus, dass ein Null-Index der Sensorvorrichtung bekannt ist. Dieser kann z.B. mit Hilfe des hoch auflösenden Referenz-Lagegebers bestimmt werden. Bei Verwendung dieses hoch auflösenden Referenzlagegebers können die Inkremente der Sensorvorrichtung bis jeweils zu einer Kommutierungsposition als ganze Zahlen oder Bruchzahlen errechnet werden.

Die Möglichkeit, Daten zu speichern, ermöglicht es dem erfindungsgemäßen Motor auch, zusätzliche Informationen im Motor zu speichern und jederzeit verfügbar zu haben. Hierzu kann eine Schnittstelle 52 zur Erfassung von Grunddaten und Eingabe von Kenndaten und weitere Informationen über den Motor vorgesehen sein, z.B. zur Eingabe einer Produktionsnummer, Produktionsdaten und anderer Motordaten, welche für die Steuerung des Motors nützlich sein können.

Mit dem erfindungsgemäßen Verfahren und System lässt sich eine Sensorvorrichtung an einem elektronisch kommutierten Gleichstrommotor ohne mechanische Einstellung justieren, wobei die erfindungsgemäße Justierung nach Art eines Lemmodus verläuft. Mit dem erfindungsgemäßen Verfahren ist eine wesentlich genauere Justierung der Sensorvorrichtung möglich, als durch die mechanische Einstellung gemäß dem Stand der Technik. Während im Stand der Technik bei mechanischer Einstellung der Sensorvorrichtung Abweichungen von ±2° von den jeweiligen Kommutierungspositionen üblich waren, liegen die Toleranzen bei dem erfindungsgemäßen Verfahren, abhängig von der Auflösung der Sensorvorrichtung, um ein bis zwei Größenordnungen darunter. Wird beispielsweise ein Encoder mit einer Auflösung von 1024 Bit als Sensorvorrichtung verwendet, so beträgt die Schrittweite eines Inkrements 360° : 1024 = 0,35°. Hieraus ergibt sich die Möglichkeit der Einstellung der Sensorvorrichtung innerhalb sehr geringer Toleranzen.

Die in der vorstehenden Beschreibung, den Ansprüchen und der Zeichnung offenbarten Merkmale können sowohl einzeln als auch in beliebiger Kombination für die Verwirklichung der Erfindung von Bedeutung sein.

Bezugszeichenliste

| 10 | Sternschaltung |
|---|---|
| 12, 14, 16 | Wicklungen |
| 18, 20 | Versorgungsschiene |
| 22-32 | Leistungs-Schaltbauteile |
| 40 | Motor |
| 42 | Antrieb |
| 44 | Phasenmeßsystem |
| 46 | Positionsrechner |
| 48 | Kontrollstufe |
| 50 | Meldestufe |

**Patentansprüche**

1. Verfahren zum Justieren einer Sensorvorrichtung zur Bestimmung der Drehlage eines Rotors eines elektronisch kommutierten Motors, der einen Rotor und einen Stator aufweist, bei dem

 die Sensorvorrichtung in einer bestimmten Lage relativ zu dem Rotor montiert wird,
 die Inkremente, welche die Sensorvorrichtung während einer Umdrehung des Rotors erzeugt, erfasst werden,
 die Winkellage des Rotors während der Umdrehung erfasst wird,
 die erfasste Winkellage mit den Inkrementen der Sensorvorrichtung korreliert wird und
 die Korrelation von Winkellage und Inkrementen der Sensorvorrichtung gespeichert wird.

2. Verfahren nach Anspruch 1, **dadurch gekennzeichnet, dass** jedem Inkrement der Sensorvorrichtung eine bestimmte Winkellage des Rotors zugeordnet wird.

3. Verfahren nach Anspruch 1 oder 2, **dadurch gekennzeichnet, dass** die Sensorvorrichtung einen Null-Index erzeugt und die Anzahl der Inkremente der Sensorvorrichtung gezählt werden, die zwischen der Erzeugung des Null-Indexes und einem Schaltwinkel den Motors liegen.

4. Verfahren nach Anspruch 3, **dadurch gekennzeichnet, dass** die Anzahl der Inkremente der Sensorvorrichtung gezählt werden, die zwischen der Erzeugung des Null-Indexes und jedem Schaltwinkel den Motors liegen.

5. Verfahren nach Anspruch 3 oder 4, **dadurch gekennzeichnet, dass** die Anzahl der Inkremente der Sensorvorrichtung vom Null-Index zum Schaltwinkel des Motors gespeichert werden.

6. Verfahren nach einem der vorangehenden Ansprüche, **dadurch gekennzeichnet, dass** zur Justierung der Sensorvorrichtung die Winkellage des Rotors mit einem Positionsgeber erfasst wird, dessen Auflösung gleich oder höher ist als die Auflösung der Sensorvorrichtung.

7. Verfahren nach einem der vorangehenden Ansprüche, **dadurch gekennzeichnet, dass** Winkellagen des Rotors, die zwischen zwei Inkrementen der Sensorvorrichtung liegen, interpoliert werden.

8. Verfahren nach einem der vorangehenden Ansprüche, **dadurch gekennzeichnet, dass** der Motor angetrieben wird und die von dem Motor induzierten Spannungen erfasst werden, wobei von den induzierten Spannungen die Winkellage des Rotors und ein gesuchter Kommutierungswinkel abgeleitet werden.

9. Verfahren nach Anspruch 8, **dadurch gekennzeichnet, dass** bei Erfassung des gesuchten Kommutierungswinkels ein Meldesignal erzeugt wird, um die erfasste Winkellage als Kommutierungsposition zu kennzeichnen.

10. Verfahren nach Anspruch 8 oder 9, **dadurch gekennzeichnet, dass** abhängig von dem Polzahlverhältnis des Motors mehrere Kommutierungswinkel abgeleitet werden.

11. Elektronisch kommutierter Motor mit einem Rotor und einem Stator und mit einer Sensorvorrichtung zur Erfassung der Drehlage des Rotors, wobei die Sensorvorrichtung in einer bestimmten Lage relativ zu dem Rotor montiert ist, mit einer Speichervorrichtung zur Speicherung einer Korrelation von Winkellage des Rotors und Inkrementen der Sensorvorrichtung, und mit einer Steuereinrichtung zur Steuerung des Motors abhängig von Ausgangssignalen der Sensorvorrichtung und der gespeicherten Korrelation.

12. System zur Justierung einer Sensorvorrichtung zur Bestimmung der Drehlage eines Rotors eines elektronisch kommutierten Motors (40), der einen Rotor und einen Stator sowie die Sensorvorrichtung umfasst, mit einer Phasenmessvorrichtung (44) zur Messung der von dem Rotors induzierten Spannungen bei Drehung des Rotors des Motor (40); einer Kommutierungsrechenvorrichtung (46) zur Berechnung der Kommutierungszeitpunkte abhängig von den induzierten Spannungen, einer Meldeimpuls-Erzeugungseinrichtung (50), die ein Eingangssignal von der Kommutierungsrechenvorrichtung (46) erhält und zu jedem Kommutierungszeitpunkt einen Meldeimpuls erzeugt und an den Motor (40) ausgibt; und mit einer Speichereinrichtung zur Speicherung einer Korrelation zwischen den Kommutierungszeitpunkten und den Inkrementen der Sensorvorrichtung.

13. System nach Anspruch 12, **dadurch gekennzeichnet, dass** ein zusätzlicher Referenz-Lagegeber an dem Motors für die Justierung vorgesehen ist.

14. System nach Anspruch 12, **dadurch gekennzeichnet, dass** der Referenzlagegeber eine höhere Auflösung als die Sensorvorrichtung hat und die Inkremente des Referenz-Lagegebers und der Sensorvorrichtung korreliert werden.

FIG. 1

EP 1 420 510 A1

Fig. 2A

W

V

U

360

300

240

180

120

60

0

1.5   1   0.5   0   -0.5   -1   -1.5

Winkel (°elektrisch)

phase A          phase B          phase C

Fig. 2B

Fig. 2C

Fig. 3

42 — Antrieb für Messung ↔ **MOTOR** 40

Positionslage-geber

Grunddaten-Ermittlung
Kenndateneingabe

ÜBERGABE

52

44 — Phasenmess-System

Back EMF

Meldesignal zur Datenübernahme

46 — Positionsrechner → Kontroll-Gültigkeitsprüfung → Signalgenerierung zur Positionsspeicherung

48 — 50 —

Fig. 4

**Europäisches Patentamt**

## EUROPÄISCHER RECHERCHENBERICHT

Nummer der Anmeldung

EP 03 02 1400

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 196 47 897 A (A B ELEKTRONIK GMBH) 28. Mai 1998 (1998-05-28) * Spalte 5, Zeile 27 - Spalte 7, Zeile 40; Abbildungen * --- | 1,3-5,12 | H02P6/18 |
| D,Y | DE 100 33 561 A (PREC MOTORS DEUTSCHE MINEBEA G) 21. Juni 2001 (2001-06-21) | 1,3-5,12 | |
| A | * das ganze Dokument * ----- | 11 | |

**RECHERCHIERTE SACHGEBIETE (Int.Cl.7)**

H02P
G01D

Der vorliegende Recherchenbericht wurde für alle Patentansprüche erstellt

| Recherchenort | Abschlußdatum der Recherche | Prüfer |
|---|---|---|
| DEN HAAG | 26. Januar 2004 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie,übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.**                EP 03 02 1400

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2004

| Im Recherchenbericht angeführtes Patentdokument | | Datum der Veröffentlichung | Mitglied(er) der Patentfamilie | | Datum der Veröffentlichung |
|---|---|---|---|---|---|
| DE 19647897 | A | 28-05-1998 | DE | 19647897 A1 | 28-05-1998 |
| | | | DE | 59709352 D1 | 27-03-2003 |
| | | | WO | 9822781 A1 | 28-05-1998 |
| | | | EP | 0879398 A1 | 25-11-1998 |
| | | | ES | 2191869 T3 | 16-09-2003 |
| | | | JP | 2000504425 T | 11-04-2000 |
| | | | US | 6246968 B1 | 12-06-2001 |
| DE 10033561 | A | 21-06-2001 | DE | 10033561 A1 | 21-06-2001 |
| | | | JP | 2001045788 A | 16-02-2001 |
| | | | US | 6400109 B1 | 04-06-2002 |

EPO FORM P0461

Für nähere Einzelheiten zu diesem Anhang : siehe Amtsblatt des Europäischen Patentamts, Nr.12/82